(19) Europäisches Patentamt
European Patent Office
Office européen des brevets

(11) EP 0 710 671 B1

(12) EUROPEAN PATENT SPECIFICATION

(45) Date of publication and mention of the grant of the patent:
**10.02.1999 Bulletin 1999/06**

(51) Int Cl.[6]: **C08B 31/12**

(21) Application number: **95202951.0**

(22) Date of filing: **31.10.1995**

# (54) 2-Nitroalkyl ethers of native or modified starch, method for the preparation thereof, and ethers derived therefrom

2-Nitroalkylethers nativer oder modifizierter Stärke, Verfahren zu ihrer Herstellung und entsprechende Ethers

Ethers 2-nitroalcoyles d'amidon native ou modifié, procédé pour leur préparations et éthers correspondants

(84) Designated Contracting States:
**AT BE CH DE DK ES FR GB GR IE IT LI LU MC NL PT SE**
Designated Extension States:
**LT LV SI**

(30) Priority: **01.11.1994 NL 9401811**

(43) Date of publication of application:
**08.05.1996 Bulletin 1996/19**

(73) Proprietor: **Coöperatieve Verkoop- en Productievereniging van Aardappelmeel en Derivaten 'AVEBE' B.A.**
**NL-9641 JA Veendam (NL)**

(72) Inventors:
- **Gotlieb, Kornelis Fester**
  **NL-9643 LC Veendam (NL)**
- **Bleeker, Ido Pieter**
  **NL-9791 TS Ten Boer (NL)**
- **Van Doren, Hendrik Arend**
  **NL-9722 WD Groningen (NL)**
- **Heeres, Andre**
  **NL-9718 KJ Groningen (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**EP-A- 0 155 931**
**NL-C- 127 002**
**US-A- 2 813 093**
**US-A- 3 338 883**

- **DATABASE WPI Week 8428 Derwent Publications Ltd., London, GB; AN 176008 & SU-A-1 052 509 (LATV UNIV) , 7 November 1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 710 671 B1

Printed by Jouve, 75001 PARIS (FR)

## Description

This invention relates to 2-nitroalkyl ethers of native or modified starch with interesting possibilities of application.

From AT-B-381 498 it is known to prepare 2-nitroalkyl ethers of carbohydrates by reacting carbohydrates with an average molecular weight of 1,000 to 30,000 with a nitroalkene. The reaction takes place in aqueous medium in the presence of an alkaline catalyst. According to Example 16, soluble starch is gelatinized and dissolved in a strongly alkaline aqueous medium and converted with 2-nitropropene. Thereby an impure, gelatinized reaction product with a high degree of substitution (DS = 1.1) is obtained, which can only be purified via laborious techniques, which is difficult to handle and which is unsuitable to be used, for instance, as binder or thickener.

A first object of the invention is to provide a starch derivative as mentioned above in an easy-to-handle granular form, which has the further advantages that the product can be readily obtained in pure form and if desired can easily be subjected to further conversions.

Another object of the invention is to provide a starch derivative as mentioned above, which yields a high viscosity in a relatively low concentration, so that it is very suitable to be used as thickener or binder, for instance in adhesives, in paper making or in the textile industry.

According to yet another object of the invention, the aim is to provide compounds derived from the present 2-nitroalkyl ethers, which by the presence of cationic or anionic groups possess properties that render them particularly suitable for use as thickener with cationic and anionic properties, respectively.

A further aim is to provide a method for the preparation of 2-nitroalkyl ethers as mentioned above, whereby, through a simple control of the conditions of preparation a pure or easy-to-purify granular product is obtained with a good efficiency.

According to a first aspect, the invention accordingly relates to 2-nitroalkyl ethers of native or modified starch, which ethers are granular, have an average molecular weight of at least 300,000 and optionally carry further substituents on the alkyl group.

According to a further aspect, the invention relates to a method for preparing 2-nitroalkyl ethers as defined above, wherein non-gelatinized native or modified starch with an average molecular weight of at least 300,000 is reacted in an aqueous alkaline suspension with an optionally substituted nitroalkene compound, the reaction conditions being chosen such that the granular form of the native or modified starch is maintained.

According to yet another aspect, the invention relates to ethers of native or modified starch which are derived from 2-nitroalkyl ethers as defined above, which derived ethers are characterized in that the nitro group is reduced to form a primary amino group which may further be converted with a compound containing a cationic or anionic group.

Finally, the invention relates to the use of 2-nitroalkyl ethers as defined above or ethers derived therefrom, also as defined above, in adhesives, as additives in drilling muds or as additive in paper making or in the manufacture of textile products.

For obtaining the present 2-nitroalkyl ethers, the starting material can be native starch or previously modified starch, such as acid-hydrolysed starch, oxidized starch, esterified starch, etherified starch or cross-linked starch, provided that the starch starting product is not gelatinized or, stated differently, has maintained its granular form and has a molecular weight of at least 300,000. According to a particular embodiment, the starting material is a modified starch, the modification consisting in the circumstance that cationic or anionic groups, for instance via ether or ester bonds, have been provided on the anhydroglycosation of the starch molecule. Thus a cationic or an anionic modification may already be present in the starting product. Examples of cationic groups are quaternary ammonium and phosphonium groups, while examples of anionic groups include, for instance, sulfate, sulfonate, carboxyl, phosphate and phosphonate groups. The starch itself can be of any origin, such as potato starch, maize starch, waxy maize starch, wheat starch, or tapioca starch.

The reagent for inserting nitroalkyl groups is an optionally substituted nitroalkene compound, which can be represented by the formula:

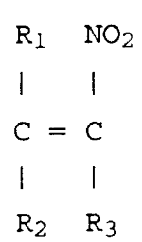

wherein $R_1$, $R_2$ and $R_3$ independently represent hydrogen or an alkyl group, while the latter may be substituted by a cationic or an anionic group. Examples of such nitroalkenes are 1-nitropropene, 2-nitropropene, 2-nitrobutene-1, 1-nitrobutene-1, 1-nitropentene-1 and 1-nitro-octene-1.

Since such nitroalkene compounds are difficult to handle and are little stable, in particular the lower nitroalkenes, in practice often use is made of precursors, from which the nitroalkene itself is formed in situ under the alkaline conditions of the reaction medium. To be mentioned as suitable precursors are especially α-nitro-β-acyloxy alkanes and α-nitro-β-halogen alkanes, which according to the reaction equations given below yield the nitroalkene itself:

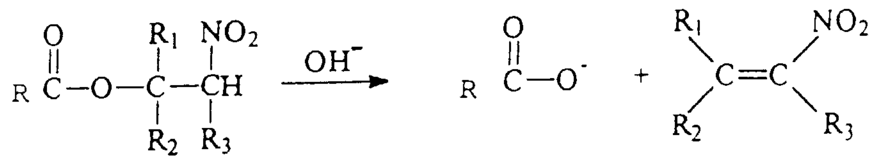


wherein R represents hydrogen or preferably an alkyl group

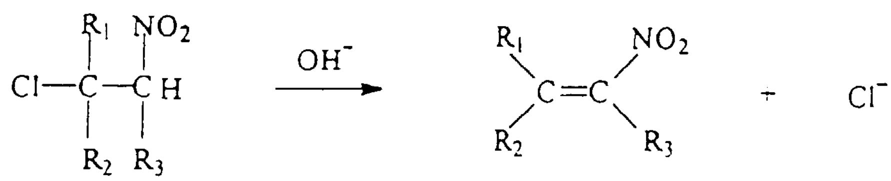


Specific compounds belonging to the above-mentioned classes of α-nitro-β-acyloxy alkanes and α-nitro-β-halogen alkanes are mentioned in the examples hereinbelow.

Starting from a nitroalkene compound of the above-represented formula, the reaction with the non-gelatinized native or modified starch with an average molecular weight of at least 300,000 (represented with St) can be represented by the following reaction equation:

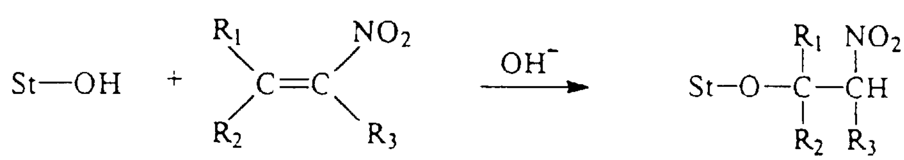


The present 2-nitroalkyl ethers can be prepared by suspending the selected native or modified starch in non-gelatinized form in water, whereafter the selected nitroalkylation agent is added under the desired reaction conditions. As nitroalkylation agent, as stated, preferably a precursor is used, which is preferably introduced gradually into the reaction medium as the conversion progresses. Thus a uniform and well controllable course of the conversion can be obtained.

The reaction conditions are mild and are aimed in particular at maintaining the granular form of the starch and also achieving the desired degree of substitution. The reaction takes place in alkaline medium, but the pH should not be too high because otherwise gelatinization will readily occur. Therefore the pH is chosen in the range of 7-11. So far as necessary to effect a uniform progress of the reaction, alkali is added during the conversion to neutralize the acid released from the precursor.

A further reaction condition that is relevant is the temperature: it should not be too high and is at most 40°C, again to prevent the starch granules from swelling too much and starting to gelatinize. By the addition of swelling inhibitors which are known per se, such as sodium chloride or sodium sulfate, swelling can be suppressed.

Finally, the molar substitution (m.s. as defined hereafter) and, in conjunction therewith, the total added amount of nitroalkylation agent is of importance. In fact, the molar substitution is preferably between 0.005 and 0.3. An m.s. below 0.01 generally produces too slight an extent of the effect contemplated with the performance of the substitution, while an m.s. above 0.3 produces little of no plus-effect and further increases the risk of gelatinization.

After the desired m.s. has been achieved, the reaction can be stopped by neutralizing the reaction medium, for instance by adding an HCl solution, whereafter the granular reaction product can be quite simply obtained in pure form by diluting a number of times with water and decanting the washing water, whereafter the reaction product can finally be filtered off and dried.

Because of its granular form, the thus obtained product is as easy to handle as the equally granular starting product. It can be used as an additive having thickening or binding activity for numerous applications which are known per se, such as in drilling muds, in adhesives, in the manufacture of textile products and especially in paper making, a striking observation being that generally a lower concentration will suffice to achieve a comparable effect. In connection with the application contemplated - and this should therefore be taken into account - it is observed that the product obtained is normally electrically neutral, unless an electrical charge has been or is introduced by cationic or anionic substitution on the starting starch product and/or on the nitroalkene compound or the precursor thereof or via a later substitution on the alkyl section of the 2-nitroalkyl ether. Examples of groups that can provide such charge have been mentioned hereinbefore.

The present 2-nitroalkyl ethers of native or modified starch can also serve as intermediate for all kinds of further conversions. According to a particular embodiment of the invention, the nitro group is reduced, for instance by catalytic hydrogenation with hydrogen or with a reducing agent such as sodium dithionite, whereby a primary amino group is formed, which in an aqueous medium at a sufficiently low pH gives the product a positive charge. As a consequence, that product can be successfully applied in the paper manufacture, because that positive charge, in combination with the often negative charge of the paper fiber itself, yields a higher retention of the paper fiber slurry on the sieve. Also, the amino group thus formed can directly or subsequently be further converted to introduce desired groups. The above-mentioned reduction of the nitro group and optional further conversions are preferably also carried out in such a manner that the original granular form is maintained. The derived compounds, obtained by reduction and optional further conversicn, can also be used as thickener or as binder in applications as mentioned above.

NL-B-127 002 discloses to use aminoalkyl ethers of starch having a primary amino group and being either or not in gelatinized form, in combination with a water-soluble aldehyde to produce a waterproof coarsing on paper or cardboard.

US-A-2,813,093 also discloses granular starch derivatives with an amino group. This amino group, however, is always a tertiary amino group which, in contrast with the present primary amino group, is unsuitable for carrying out downstream reactions, except for quaternation.

The invention will be further explained in and by the following examples. In these examples, as starch, always native potato starch is used. The preparation of the nitroalkyl ethers (Examples 1-19) and the reduction of nitroalkyl ethers (Examples 20-22) are always carried out at a temperature of 15-25°C. According to all examples, a granular end product is obtained. By "ds" is meant the dry matter content and "$T_{gel}$" denotes the gelling temperature, i.e. the temperature at which the granular product obtained starts to gelatinize. From the %N the m.s. is calculated according to the formula given hereinafter.

EXAMPLE 1

*The reaction of starch with (2-nitropropyl)-acetate*

100.11 g starch (ds = 86.90%) is suspended in 100 ml $H_2O$ which contains 5.00 g $Na_2SO_4$. With a 1 M NaOH solution the pH of the starch suspension is adjusted to 10.0. An amount of 5.14 g (2-nitropropyl)-acetate (0.035 mol) is carefully added dropwise to the suspension. By additions of a 1 M NaOH solution the pH is maintained at a constant value of 10.0. After 45 minutes of stirring, the suspension is neutralized to pH=7 by addition of a 0.5 N HCl solution. To the suspension 1.5 l $H_2O$ is added. After sedimentation of the starch derivative, the supernatant water layer is decanted. After washing again with 1.5 1 $H_2O$ and decanting of the water layer, the product is dried in air. Yield 102.52 g 2-nitropropyl starch.

$T_{gel}$ = 53.51°C, %N = 0.50%, ds = 85.70%

EXAMPLE 2

*The reaction of starch with (2-nitrobutyl)-acetate*

The reaction conditions are equal to the reaction conditions as given for the synthesis of 2-nitropropyl starch

in Example 1, with the understanding that 100.68 g starch and 5.64 g (2-nitrobutyl)-acetate (0.035 mol) were employed. Yield 102.73 g 2-nitrobutyl starch.
$T_{gel}$ = 55.01°C, %N = 0.50%, ds = 85.72%

EXAMPLE 3

*The reaction of starch with (2-nitropentyl)-acetate*

The reaction conditions are equal to the reaction conditions as given for the synthesis of 2-nitropropyl starch in Example 1, with the understanding that 100.03 g starch and 6.20 g (2-nitropentyl)-acetate (0.035 mol) were employed. Yield 102.23 g 2-nitropentyl starch.
$T_{gel}$ = 54.78°C, %N = 0.47%, ds = 86.53%

EXAMPLE 4

*The reaction of starch with (2-nitrohexyl)-acetate*

The reaction conditions are equal to the reaction conditions as given for the synthesis of 2-nitropropyl starch in Example 1, with the understanding that 100.51 g starch and 6.24 g (2-nitrohexyl)-acetate (0.033 mol) were employed. Yield 103.31 g 2-nitrohexyl starch.
$T_{gel}$ = 56.05°C, %N = 0.43%, ds = 87.05%

EXAMPLE 5

*The reaction of starch with (1-nitro-2-propyl)-acetate*

185.26 g starch (ds = 86.90%) is suspended in 300 ml $H_2O$ which contains 40.21 g $Na_2SO_4$. With a 1 M NaOH solution the pH of the starch suspension is adjusted to 10.5. An amount of 15.71 g (1-nitro-2-propyl)-acetate (0.11 mol) is carefully added dropwise to the suspension. By additions of a 1 M NaOH solution the pH is maintained at a constant level of 10.5. After 2 hours of stirring the suspension is neutralized to pH=7 by addition of a 0.5 N HCl solution and filtered. After washing with 2.0 1 $H_2O$ and 400 ml acetone, the product is dried in air. Yield 176.53 g 1-methyl-2-nitroethyl starch.
$T_{gel}$ = 60.88°C, %N = 0.32%, ds = 87.75%

EXAMPLE 6

*The reaction of starch with 1-pentyl-2-nitroethyl acetate*

The reaction conditions are equal to the reaction conditions as given for the synthesis of 1-methyl-2-nitroethyl starch in Example 5, with the understanding that 188.13 g starch and 25.13 g (1-nitro-2-heptyl)-acetate (0.123 mol) were employed. Yield 187.13 g (1-pentyl-2-nitroethyl starch).
$T_{gel}$ = 62.18°C, %N = 0.25%, ds = 87.53%

EXAMPLE 7

*The reaction of starch with (3-nitro-2-butyl)-acetate*

The reaction conditions are equal to the reaction conditions as given for the synthesis of 1-methyl-2-nitroethyl starch in Example 5, with the understanding that 182.50 g starch and 9.80 g (3-nitro-2-butyl)-acetate (0.105 mol) were employed. Yield 178.89 g 1-methyl-2-nitropropyl starch.
$T_{gel}$ = 60.81°C, %N = 0.23%, ds = 86.90%

EXAMPLE 8

*The reaction of starch with (3-nitro-2-pentyl)-acetate*

The reaction conditions are equal to the reaction conditions as given for the synthesis of 1-methyl-2-nitroethyl starch in Example 5, with the understanding that 184.65 g starch and 19.98 g (3-nitro-2-pentyl)-acetate (0.105 mol)

were employed. Yield 186.21 g 1-methyl-2-nitropropyl starch.
%N = 0.05%, ds = 85.44%.

Table 1 gives a review of the suspension reactions of β-nitroacetoxy alkanes with starch as described in Examples 1-8.

The explanation of the abbreviations used in the examples and the associated tables is as follows:
m.s. (molar substitution) is defined as the number of mole nitroalkyl units per mole glucose units of the nitroalkyl starch derivative;
the m.s. of the nitroalkyl starch derivative can be determined from the measured nitrogen content according to the formula:

$$m.s. = 1.62N/\{14 - 0.01N \times (MWt_{alkylsubst} - 1)\}$$

wherein
N = measured nitrogen content in %N (Carlo Erba) $MWt_{alkylsubst}$ = the molecular weight of the nitroalkyl substituent;
$T_{gel}$ (the gelling temperature of the nitroalkyl starch derivative) was determined with a Differential Scanning Calorimeter (DSC) at 80% moisture, with the peak value being taken as gelling temperature;
$m.s._{max}$ is defined as the molar substitution which is achieved if the reaction of starch with the nitroalkene formed (*in situ*) proceeds quantitatively.

**Table 1.** Review of suspension reactions of β-nitro-acetoxy alkanes with starch

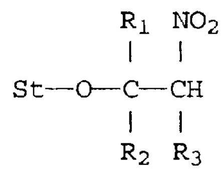

| nitroalkyl starch derivative | reagent | $R_1$ | $R_2$ | $R_3$ | %N | m.s. | $T_{gel}$ | m.s./ m.s. max. | Ex. No. |
|---|---|---|---|---|---|---|---|---|---|
| starch (reference) | -- | -- | -- | -- | -- | -- | 63.53 | -- | -- |
| 2-nitropropyl starch | (2-nitropropyl)-acetate | H | H | $CH_3$ | 0.50 | 0.060 | 53.51 | 0.92 | 1 |
| 2-nitrobutyl starch | (2-nitrobutyl)-acetate | H | H | $C_2H_5$ | 0.50 | 0.060 | 55.01 | 0.92 | 2 |
| 2-nitropentyl starch | (2-nitropentyl)-acetate | H | H | n-$C_3H_7$ | 0.47 | 0.057 | 54.78 | 0.87 | 3 |
| 2-nitrohexyl starch | (2-nitrohexyl)-acetate | H | H | n-$C_4H_9$ | 0.43 | 0.052 | 56.05 | 0.85 | 4 |
| 1-methyl-2-nitroethyl starch | (1-nitro-2-propyl)-acetate | H | $CH_3$ | H | 0.32 | 0.038 | 60.88 | 0.36 | 5 |
| 1-pentyl-2-nitroethyl starch | (1-nitro-2-heptyl)-acetate | H | $C_5H_{11}$ | H | 0.25 | 0.030 | 62.18 | 0.24 | 6 |
| 1-methyl-2-nitropropyl starch | (3-nitro-2-butyl)-acetate | H | $CH_3$ | $CH_3$ | 0.23 | 0.027 | 60.81 | 0.43 | 7 |
| 1-methyl-2-nitrobutyl starch | (3-nitro-2-pentyl)-acetate | H | $CH_3$ | $C_2H_5$ | 0.05 | 0.006 | -- | 0.06 | 8 |

From Table 1 it appears that the efficiencies (m.s./m.s.$_{max}$) for the reactions where *in situ* 2-nitro-1-alkenes are formed (Examples 1-4) are higher than for reactions where *in situ* 1-nitro-1-alkenes or internal nitroalkenes are formed (Examples 5-8). The efficiencies of the nitroalkyl starch derivatives from Examples 5-8 can be increased by carrying out the reaction at a lower pH and a lower concentration of $Na_2SO_4$ and $H_2O$.

EXAMPLE 9

*The reaction of starch with (2-nitropropyl)-formiate*

The reaction conditions are equal to the reaction conditions as given for the synthesis of 2-nitropropyl starch in Example 1, with the understanding that 100.24 g starch and 4.65 g (2-nitropropyl)-formiate (0.035 mol) were employed. Yield 101.01 g 2-nitropropyl starch.
$T_{gel}$ = 61.61°C, %N = 0.12%, ds = 86.24%

EXAMPLE 10

*The reaction of starch with (2-nitropropyl)-propionate*

The reaction conditions are equal to the reaction conditions as given for the synthesis of 2-nitropropyl starch in Example 1, with the understanding that 100.00 g starch and 5.64 g (2-nitropropyl)-propionate (0.035 mol) were employed. Yield 100.08 g 2-nitropropyl starch.
$T_{gel}$ = 51.24°C, %N = 0.55%, ds = 87.08%

EXAMPLE 11

*The reaction of starch with (2-nitropropyl)-butyrate*

The reaction conditions are equal to the reaction conditions as given for the synthesis of 2-nitropropyl starch in Example 1, with the understanding that 100.11 g starch and 6.14 g (2-nitropropyl)-butyrate (0.035 mol) were employed. Yield 98.45 g 2-nitropropyl starch.
$T_{gel}$ = 51.12°C, %N = 0.54%, ds = 87.20%

Table 2 gives a review of the suspension reactions of starch with different 2-nitropropyl alkanoates as described in Examples 9-11.

**Table 2.** Results of reactions of 2-nitropropyl alkanoates with starch

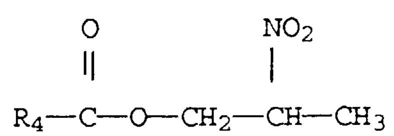

| $R_4$ | %N | m.s. | $T_{gel}$ | m.s./ m.s.$_{max.}$ | Example No. |
|---|---|---|---|---|---|
| H | 0.12 | 0.014 | 61.61 | 0.18 | 9 |
| $CH_3$ | 0.50 | 0.060 | 53.51 | 0.92 | 1 |
| $C_2H_5$ | 0.55 | 0.065 | 51.24 | 1.00 | 10 |
| $C_3H_7$ | 0.54 | 0.065 | 52.12 | 0.99 | 11 |

From Table 2 it appears that the type of alkanoate greatly affects the efficiency of the reaction. With (2-nitropropyl)-acetate,-propionate and -butyrate significantly higher efficiencies are obtained than with (2-nitropropyl)-formiate.

Examples 12 through 15 describe the preparation of a number of nitroalkyl starch derivatives. These are obtained by reacting starch with an α-nitro-halogen alkane under appropriate conditions.

EXAMPLE 12

*The reaction of starch with 1-chloro-2-nitroethane*

The reaction conditions are equal to the reaction conditions as given for the synthesis of 1-methyl-2-nitroethyl starch in Example 5, with the understanding that 30.22 g starch and 3.03 g 1-chloro-2-nitroethane (0.027 mol) were employed. Yield 30.25 g 2-nitroethyl starch.
%N = 0.31%, ds = 86.71%

EXAMPLE 13

*The reaction of starch with 1-chloro-2-nitropropane*

The reaction conditions are equal to the reaction conditions as given for the synthesis of 1-methyl-2-nitroethyl starch in Example 5, with the understanding that 188.84 g starch and 13.26 g 1-chloro-2-nitropropane (0.107 mol) were employed. Yield 188.69 g 2-nitropropyl starch.
$T_{gel}$ = 53.54°C, %N = 0.49%, ds = 87.25%

EXAMPLE 14

*The reaction of starch with 1-chloro-2-nitrobutane*

The reaction conditions are equal to the reaction conditions as given for the synthesis of 2-nitropropyl starch in Example 1, with the understanding that 100.62 g starch and 4.83 g 1-chloro-2-nitrobutane (0.035 mol) were employed. Yield 101.13 g 2-nitrobutyl starch.
$T_{gel}$ = 56.67°C, %N = 0.42%, ds = 86.84%

EXAMPLE 15

*The reaction of starch with 2-chloro-3-nitropentane*

The reaction conditions are equal to the reaction conditions as given for the synthesis of 1-methyl-2-nitroethyl starch in Example 5, with the understanding that 99.62 g starch and 7.40 g 2-chloro-2-nitropentane (0.049 mol) were employed. Yield 98.98 g 1-methyl-2-nitrobutyl starch.
$T_{gel}$ = 61.08°C, %N = 0.27%, ds = 85.80%

Table 3 gives a review of suspension reactions of starch with different α-nitrohalogen alkanes.

**Table 3.** Review of suspension reactions of starch with α-nitrohalogen alkanes

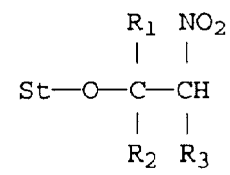

| nitroalkyl starch derivative | reagent | $R_1$ | $R_2$ | $R_3$ | %N | m.s. | $T_{gel}$ | m.s./ m.s. max. | Ex. No. |
|---|---|---|---|---|---|---|---|---|---|
| starch (reference) | -- | -- | -- | -- | -- | -- | 63.53 | -- | -- |
| 2-nitroethyl starch | 1-chloro-2-nitroethane | H | H | H | 0.31 | 0.036 | -- | 0.21 | 12 |
| 2-nitropropyl starch | 1-chloro-2-nitropropane | H | H | $CH_3$ | 0.49 | 0.058 | 53.54 | 0.55 | 13 |
| 2-nitrobutyl starch | 1-chloro-2-nitrobutane | H | H | $C_2H_5$ | 0.42 | 0.050 | 56.67 | 0.77 | 14 |
| 1-methyl-2-nitrobutyl starch | 2-chloro-3-nitropentane | H | $CH_3$ | $C_2H_5$ | 0.12 | 0.014 | 62.50 | 0.15 | 15 |

The rather low efficiency of the suspension reaction of starch with 1-chloro-2-nitroethane (Example 12) is probably caused by the instability of the *in situ* formed nitroethene (anionic polymerisation (oligomerisation) to polynitroethene). Starting from α-nitrohalogen alkanes, in this case too the efficiency of *in situ* formed 2-nitro-1-alkenes (Examples 12-14) is higher than for an *in situ* formed internal nitroalkene (Example 15). The efficiencies of Examples 12, 13 and 15 can be increased by carrying out the reaction at a lower pH and a lower concentration of $Na_2SO_4$ and $H_2O$.

Examples 16 through 18 describe the preparation of a number of nitroalkyl starch derivatives. These are obtained by reacting starch with a nitroalkene under appropriate conditions.

EXAMPLE 16

*The reaction of starch with 2-nitropropene*

The reaction conditions are equal to the reaction conditions as given for the synthesis of 2-nitropropyl starch in Example 1, with the understanding that 201.62 g starch and 7.13 g 2-nitropropene (0.082 mol) were employed. Yield 200.38 g 2-nitropropyl starch.
$T_{gel}$ = 50.54°C, %N = 0.50%, ds = 85.43%

EXAMPLE 17

*The reaction of starch with 2-nitro-1-butene*

The reaction conditions are equal to the reaction conditions as given for the synthesis of 2-nitropropyl starch in Example 1, with the understanding that 250.26 g starch and 10.10 g 2-nitro-1-butene (0.100 mol) were employed. Yield 254.14 g 2-nitrobutyl starch.
$T_{gel}$ = 52.41°C, %N = 0.49%, ds = 86.64%

EXAMPLE 18

*The reaction of starch with 3-nitro-2-pentene*

The reaction conditions are equal to the reaction conditions as given for the synthesis of 1-methyl-2-nitroethyl starch in Example 5, with the understanding that 115.26 g starch and 6.70 g 3-nitro-2-pentene (0.107 mol) were employed. Yield 113.64 g 1-methyl-2-nitrobutyl starch.
$T_{gel}$ = 61.08°C, %N = 0.27%, ds = 89.12%

The nitrogen contents, the gelling temperatures and the efficiencies of the synthesis of nitroalkyl starch derivatives by reacting starch with different nitroalkenes are shown in Table 4.

**Table 4.** Review of suspension reactions of starch with nitroalkanes

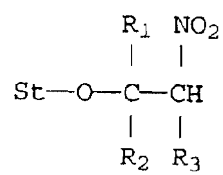

| nitroalkyl starch derivative | reagent | $R_1$ | $R_2$ | $R_3$ | %N | m.s. | $T_{gel}$ | m.s./ m.s. max. | Ex. No. |
|---|---|---|---|---|---|---|---|---|---|
| starch (reference) | -- | -- | -- | -- | -- | -- | 63.53 | -- | -- |
| 2-nitropropyl starch | 2-nitropropene | H | H | $CH_3$ | 0.50 | 0.060 | 50.54 | 0.79 | 16 |
| 2-nitrobutyl starch | 2-nitro-1-butene | H | H | $C_2H_5$ | 0.49 | 0.059 | 52.41 | 0.79 | 17 |
| 1-methyl-2-nitrobutyl starch | 2-nitro-2-pentene | H | $CH_3$ | $C_2H_5$ | 0.27 | 0.032 | 61.08 | 0.34 | 18 |

Table 4 shows that suspension reactions of starch with nitroalkenes give higher efficiencies (m.s./m.s.$_{max}$) if 2-nitro-1-alkenes are used as reagent (Examples 16 and 17).

The efficiency of the suspension reaction of starch with 3-nitro-2-pentene (Example 18) can be increased by carrying out the reaction at a slightly lower pH (10) and a lower concentration $Na_2SO_4$ and $H_2O$.

EXAMPLE 19

This example illustrates the influence of the degree of substitution of the nitroalkyl substituent on the gelling temperature and the efficiency (m.s./m.s.$_{max}$) of the reaction.

The reaction conditions chosen for the synthesis of the 2-nitrobutyl starch derivatives as mentioned in Table 5 are identical to the reaction conditions for the synthesis of 2-nitrobutyl starch in Example 2.

Table 5.

| Influence of the degree of substitution of 2-nitrobutyl starch on the gelling temperature and the efficiency (m.s./m.s.$_{max}$) of the reaction. | | | | |
|---|---|---|---|---|
| added to 160 g starch | %N | m.s. | $T_{gel}$ | m.s./m.s.$_{max.}$ |
| 0.01 mol | 0.10 | 0.018 | 60.41 | 0.86 |
| 0.02 mol | 0.17 | 0.025 | 59.03 | 0.86 |
| 0.03 mol | 0.27 | 0.034 | 57.67 | 0.86 |
| 0.05 mol | 0.45 | 0.056 | 54.52 | 0.93 |
| 0.07 mol | 0.62 | 0.073 | 51.47 | 0.93 |
| 0.09 mol | 0.74 | 0.096 | 51.17 | 0.87 |
| 0.11 mol | 0.91 | 0.113 | 47.97 | 0.88 |

Table 5 shows that an increasing degree of substitution leads to a clear reduction of the gelling temperature (determined with a Differential Scanning Calorimeter). The total amount of added reagent appears to have little influence on the efficiency of the reaction.

In Examples 20 through 22 the reduction of a nitroalkyl starch derivative ($R\text{-}NO_2$) with sodium dithionite ($Na_2S_2O_4$) is described. Reaction:

$$R\text{-}NO_2 + 3\ Na_2S_2O_4 + 4\ H_2O \rightarrow [R\text{-}NH_3]^+[NaSO_3]^- + 5\ NaHSO_3$$

EXAMPLE 20

*The reaction of 2-nitropropyl starch with $Na_2S_2O_4$ (pH=9)*

24.98 g 2-nitropropyl starch (see Example 16: %N = 0.50%, $T_{gel}$ = 50.54°C) is suspended in 50 mol $H_2O$. To the suspension 10.01 g $Na_2S_2O_4$ (57 mmol) is added, whereafter the pH of the starch suspension is adjusted to 9 with a 1 M NaOH solution. By additions of a 1 M NaOH solution the pH is maintained constant. After 20 hours of stirring at 20°C follows neutralization to pH=7 with a 0.5 N HCl solution. The suspension is filtered, washed well with $H_2O$, then suspended in $H_2O$ and acidified to pH=3. After filtration and washing with $H_2O$, the product is dried in air. Yield 24.67 g.
$T_{gel}$ = 57.93°C, %N = 0.37%, ds = 85.50%

EXAMPLE 21

*The reaction of 2-nitropropyl starch with $Na_2S_2O_4$ (pH=7)*

24.99 g 2-nitropropyl starch (see Example 16: %N = 0.50%, $T_{gel}$ = 50.54°C) is suspended in 50 ml $H_2O$. To the suspension 10.01 g $Na_2S_2O_4$ (57 mmol) is added. By additions of a 1 M NaOH solution (with a pH stat. titrator) the pH is maintained at a constant value of 7. After 20 hours of stirring at 20°C the suspension is filtered, washed well with $H_2O$, then suspended in $H_2O$ and acidified to pH=3. After filtering and washing with $H_2O$, the product is dried in air. Yield 24.21 g.
$T_{gel}$ = 57.07°C, %N = 0.47%, ds = 87.09%

EXAMPLE 22

*The reaction of 2-nitropropyl starch with $Na_2S_2O_4$ (pH=5.5)*

24.92 g 2-nitropropyl starch (see Example 16: %N = 0.50%, $T_{gel}$ = 50.54°C) is suspended in 50 ml $H_2O$. To the suspension 10.06 g $Na_2S_2O_4$ (57 mmol) is added. With a 0.5 N HCl solution the pH of the starch suspension is adjusted to 5.5. By additions of a 1 M NaOH solution (with a pH stat. titrator) the pH is maintained at a constant value of 5.5. After 20 hours of stirring at 20°C the suspension is filtered, washed well with $H_2O$, then suspended in $H_2O$ and acidified to pH=3. After filtration and washing with $H_2O$ the product is dried in air. Yield 23.36 g.
$T_{gel}$ = 58.48°C, %N = 0.44%, ds = 86.96%

Table 6 gives a review of the reaction of 2-nitropropyl starch with $Na_2S_2O_4$

Table 6.

| Reduction of 2-nitropropyl starch with $Na_2S_2O_4$ at different pH values. | | | | |
|---|---|---|---|---|
| starch derivative | pH | $T_{gel}$ | %N | Example No. |
| 2-nitropropyl starch (control) | -- | 50.54 | 0.50 | 16 |
| 2-nitropropyl starch + $Na_2S_2O_4$ | 5.5 | 58.48 | 0.44 | 22 |
| 2-nitropropyl starch + $Na_2S_2O_4$ | 7.0 | 57.07 | 0.47 | 21 |
| 2-nitropropyl starch + $Na_2S_2O_4$ | 9.0 | 57.93 | 0.37 | 20 |

Table 6 shows that the nitrogen content of the reduced starch derivatives decreases somewhat. Further, the significantly higher gelling temperature of the reduced nitroalkyl starch derivatives is remarkable. Fig. 1 shows the titration curves of the reaction of 2-nitropropyl starch with $Na_2S_2O_4$.

**Fig. 1.** Titration curves of 2-nitropropyl starch reduced (with $Na_2S_2O_4$) at various pH values

2 nitropropyl starch (2-npr) + $Na_2S_2O_4$

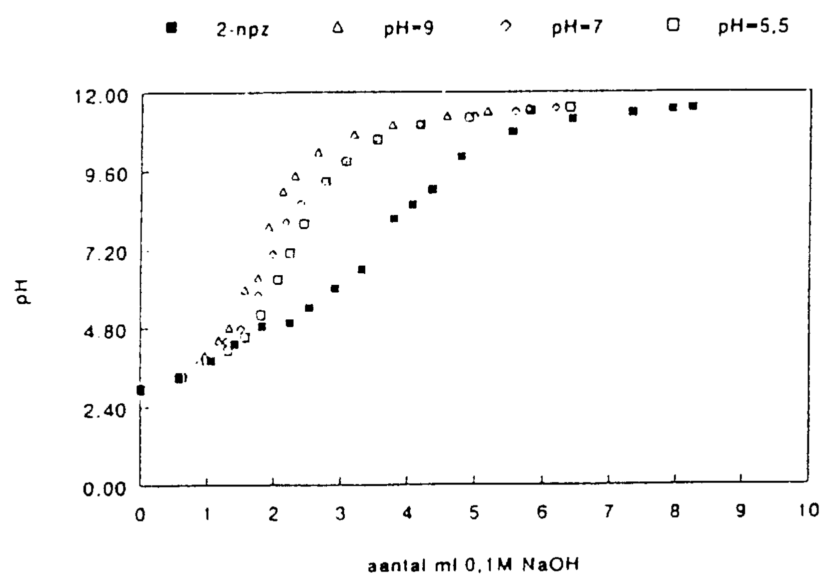


Fig. 1 shows that the titration curves of the reduced nitroalkyl starch derivatives deviate to a considerable extent from the titration curve of the starting material (2-npz). In fact, the form of the curves indicates that a true base has been formed through the reduction.

## Claims

1. 2-Nitroalkyl ethers of native or modified starch, which ethers are granular, have an average molecular weight of at least 300,000 and optionally carry further substituents on the alkyl group.

2. 2-Nitroalkyl ethers according to claim 1, characterized in that the molar substitution (m.s.) of nitroalkyl groups is between 0.005 and 0.3.

3. 2-Nitroalkyl ethers according to claim 1 or 2, characterized in that they further carry cationic or anionic groups on the alkyl group.

4. A method for preparing alkyl ethers of native or modified starch, characterized in that non-gelatinized native or modified starch of an average molecular weight of at least 300,000 is reacted in an aqueous alkaline suspension, at a temperature of at most 40°C and a pH of 7-11, with an optionally substituted nitroalkene compound to produce 2-nitroalkyl ethers of the native or modified starch in granular form, whereupon the nitro group optionally is reduced to an amino group and optionally is also converted with a compound containing a cationic or anionic group.

5. A method according to claim 4, characterized in that the optionally substituted nitroalkene compound is supplied in situ via an α-nitro-β-acyloxy alkane or α-nitro-β-halogen alkane introduced into the reaction medium.

6. Use of 2-nitroalkyl ethers according to claims 1-3 or of alkyl ethers obtained according to claim 4 or 5, as adhesive, as additive in drilling mud or as additive in paper making or in the manufacture of textile products.

## Patentansprüche

1. 2-Nitroalkylether von natürlicher oder modifizierter Stärke, die eine körnige Struktur besitzen, ein durchschnittliches Molekulargewicht von wenigstens 300.000 aufweisen und an der Alkylgruppe gegebenenfalls weitere Substituenten tragen.

2. 2-Nitroalkylether nach Anspruch 1, **dadurch gekennzeichnet,** daß die molare Substitution (m.S.) durch Nitroalkylgruppen zwischen 0,005 und 0,3 beträgt.

3. 2-Nitroalkylether nach Anspruch 1 oder 2, **dadurch gekennzeichnet,** daß sie an ihrer Alkylgruppe weitere kationische oder anionische Gruppen tragen.

4. Verfahren zur Herstellung von Alkylethern von natürlicher oder modifizierter Stärke, **dadurch gekennzeichnet,** daß eine nicht gelatinierte natürliche oder modifizierte Stärke mit einem durchschnittlichen Molekulargewicht von wenigstens 300.000 in einer wäßrigen alkalischen Suspension bei einer Temperatur von höchstens 40°C und einem pH-Wert von 7 bis 11 mit einer gegebenenfalls substituierten Nitroalkenverbindung umgesetzt wird, wobei 2-Nitroalkylether von natürlicher oder modifizierter Stärke in körniger Form gebildet wird und die Nitrogruppe anschließend gegebenenfalls zu einer Aminogruppe reduziert und gegebenenfalls mit einer Verbindung, die eine kationische oder anionische Gruppe enthält, weiter umgesetzt werden kann.

5. Verfahren nach Anspruch 4, **dadurch gekennzeichnet,** daß die gegebenenfalls substituierte Nitroalkenverbindung in situ zur Verfügung gestellt wird, indem man zu dem Reaktionsmedium ein a-Nitro-β-acyloxyalkan oder ein α-Nitro-β-halogenalkan gibt.

6. Verwendung von 2-Nitroalkylethern nach den Ansprüchen 1 bis 3 oder von nach Anspruch 4 oder 5 hergestellten Alkylethern als Klebstoff, als Additiv in Bohrschlämmen oder als Additiv bei der Papierherstellung oder bei der Herstellung von Textilprodukten.

## Revendications

1. Ethers 2-nitroalkyliques d'amidon natif ou modifié, ces éthers étant granulaires, ayant une masse moléculaire moyenne d'au moins 300 000 et portant éventuellement d'autres substituants sur le groupe alkyle.

2. Ethers 2-nitroalkyliques selon la revendication 1, caractérisés en ce que la substitution molaire (m.s.) des groupes nitroalkyles est comprise entre 0,005 et 0,3.

3. Ethers 2-nitroalkyliques selon la revendication 1 ou 2, caractérisés en ce qu'ils portent en outre des groupes cationiques ou anioniques sur le groupe alkyle.

4. Méthode de préparation d'éthers alkyliques d'amidon natif ou modifié, caractérisée en ce qu'on fait réagir de l'amidon natif ou modifié non gélatinifié d'une masse moléculaire moyenne d'au moins 300 000 dans une suspension aqueuse alcaline, à une température d'au plus 40°C et à un pH de 7-11, avec un composé de nitroalcène éventuellement substitué pour produire des éthers 2-nitroalkyliques de l'amidon natif ou modifié sous forme granulaire, par laquelle le groupe nitro est éventuellement réduit en un groupe amino et éventuellement est également converti avec un composé contenant un groupe anionique ou cationique.

5. Méthode selon la revendication 4, caractérisée en ce que le composé de nitroalcène éventuellement substitué est apporté in situ par l'intermédiaire d'un α-nitro-β-acyloxyalcane ou d'un α-nitro-β-halogénoalcane introduit dans le mélange réactionnel.

6. Utilisation d'éthers 2-nitroalkyliques selon les revendications 1-3 ou d'éthers alkyliques obtenus selon la revendication 4 ou 5, comme adhésif, comme additif dans une boue de forage ou comme additif en fabrication du papier ou dans la fabrication de produits textiles.